(19) Europäisches Patentamt
European Patent Office
Office européen des brevets

(11) EP 4 074 773 B1

(12) **EUROPEAN PATENT SPECIFICATION**

(45) Date of publication and mention of the grant of the patent:
**18.02.2026 Bulletin 2026/08**

(21) Application number: **20900006.6**

(22) Date of filing: **19.08.2020**

(51) International Patent Classification (IPC):
***C08L 9/00*** (2006.01) ***C08F 236/02*** (2006.01)
***C08K 5/10*** (2006.01) ***C08K 5/13*** (2006.01)
***C08K 5/49*** (2006.01) ***C08L 9/06*** (2006.01)
***C08L 101/00*** (2006.01)

(52) Cooperative Patent Classification (CPC):
(C-Sets available)
**C08F 210/02; C08K 5/134; C08K 5/526** (Cont.)

(86) International application number:
**PCT/JP2020/031315**

(87) International publication number:
**WO 2021/117295 (17.06.2021 Gazette 2021/24)**

(54) **COMPOSITION AND POLYMER MOLDED ARTICLE**

ZUSAMMENSETZUNG UND GEFORMTER POLYMERGEGENSTAND

COMPOSITION ET ARTICLE MOULÉ EN POLYMÈRE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **10.12.2019 JP 2019223247**

(43) Date of publication of application:
**19.10.2022 Bulletin 2022/42**

(73) Proprietor: **BRIDGESTONE CORPORATION**
**Chuo-ku**
**Tokyo 104-8340 (JP)**

(72) Inventors:
- **HOTTA, Aya**
  **Tokyo 104-8340 (JP)**
- **SHIONO, Saaya**
  **Tokyo 104-8340 (JP)**

(74) Representative: **Marks & Clerk LLP**
**15 Fetter Lane**
**London EC4A 1BW (GB)**

(56) References cited:
**EP-A1- 2 679 628**
**EP-A1- 2 700 671**
**EP-A1- 3 192 820**
**WO-A1-2015/190072**
**WO-A1-2018/194028**
**DE-T5- 112012 004 088**
**JP-A- 2001 106 832**
**JP-A- 2001 146 551**
**JP-A- 2008 144 006**
**JP-A- 2010 037 402**
**JP-A- 2012 126 917**
**JP-B2- 3 136 479**
**US-A1- 2009 247 692**
**US-A1- 2012 190 771**
**US-A1- 2013 085 225**
**US-B1- 6 290 613**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 4 074 773 B1

(52) Cooperative Patent Classification (CPC): (Cont.)

C-Sets
**C08F 210/02, C08F 4/52;**
**C08K 5/134, C08L 23/0838;**
**C08K 5/526, C08L 23/0838;**
C08F 210/02, C08F 236/06, C08F 212/08,
C08F 2500/03, C08F 2500/27, C08F 2500/36,
C08F 2500/34, C08F 2500/35

## Description

### Technical Field

The present invention relates to a composition and a polymer molded article.

### Background Art

Heretofore, various resin molded articles have been produced using olefin resins, polyamide resins and the like excellent in impact resistance and chemical resistance.

For example, from the viewpoint of obtaining polypropylene resin compositions suitable for use as paintless resin molding materials having both scratch resistance compatible with impact resistance, a polypropylene resin composition has been disclosed, which contains 75 to 90% by weight of a polypropylene resin, 7 to 15% by weight of a hydrogenated styrene/butadiene/styrene copolymer elastomer (A) having a styrene content of 18 to 42% by weight, and 3 to 10% by weight of a hydrogenated styrene/butadiene/styrene copolymer elastomer (B) having a styrene content of 12 to 15% by weight (for example, see PTL 1).

From the viewpoint of obtaining resin products having high impact resistance and transparency, a resin composition containing a multicomponent copolymer has been disclosed, in which the multicomponent copolymer contains a conjugated diene unit, a non-conjugated olefin unit and an aromatic vinyl unit and in which the content of the aromatic vinyl unit is 50 mol% or more and less than 100 mol% of all the multicomponent copolymer (for example, see PTL 2).

### Citation List

#### Patent Literature

PTL 1: JP 2012-246366A
PTL 2: WO2017/065300A1
PTL 3: EP 2 679 628 A1
PTL 4: EP 2 700 671 A1
PTL 5: US 6 290 613 B1
PTL 6: DE 11 2012 004088 T5
PTL 7: US 2013/085225 A1
PTL 8: US 2012/190771 A1
PTL 9: EP 3 192 820 A1
PTL 10: US 2009/247692 A1
PTL 11: JP 2010 037402 A
PTL 12: WO 2018/194028 A1

### Summary of Invention

#### Technical Problem

However, in the case where a resin composition is kneaded especially at a high temperature, there is room for further improvement in order to sufficiently exhibit the properties (rupture strength) of the copolymer.

An object of the present invention is to provide a polymer molded article excellent in rupture strength, and a composition capable of preventing gelation of the copolymer therein during kneading and capable of providing a polymer molded article excellent in rupture strength, and the present invention addresses a problem of achieving the object.

#### Solution to Problem

<1> A composition containing a polymer component that contains a copolymer containing a conjugated diene unit and a non-conjugated olefin unit, and a compound (A) having a 1% mass loss temperature of 200°C or higher when heated at 20°C/min in a nitrogen atmosphere, wherein the non-conjugated olefin unit is an acyclic non-conjugated olefin unit

and the compound (A) is a compound having a structure represented by the formula (5),

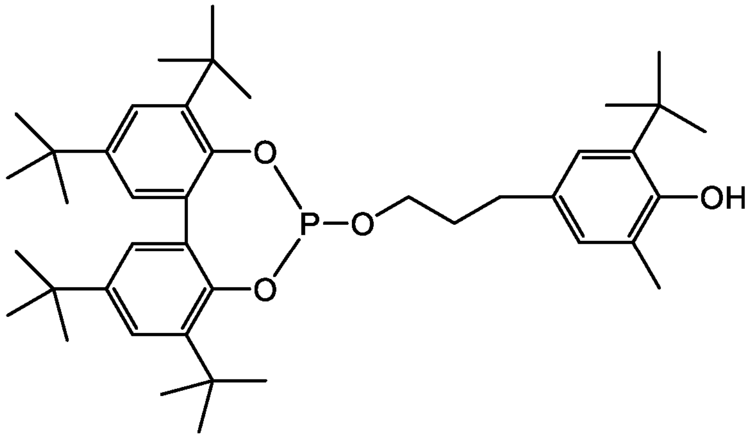

(5)

.

<2> The composition according to <1>, wherein the copolymer further contains an aromatic vinyl unit.

<3> The composition according to <1> or <2>, wherein the polymer component further contains one or more resin components selected from the group consisting of a polyolefin, a polyamide, a polyester-based thermoplastic elastomer, a polybutylene terephthalate, and a polybutylene naphthalate.

<4> The composition according to any one of <1> to <3>, wherein the content of the copolymer in the polymer component is 10 to 100% by mass.

<5> The composition according to any one of <1> to <4>, wherein in the copolymer, the content of the conjugated diene unit is more than 0 mol% and 50 mol% or less, and the content of the non-conjugated olefin unit is 50 mol% or more and less than 100 mol%.

<6> The composition according to any one of <1> to <5>, wherein the copolymer has a polystyrene-equivalent weight-average molecular weight of 100,000 to 9,000,000.

<7> The composition according to any one of <1> to <6>, wherein in the copolymer, the non-conjugated olefin unit is an acyclic non-conjugated olefin unit, and the acyclic non-conjugated olefin unit is an ethylene unit alone.

<8> The composition according to any one of <2> to <7>, wherein in the copolymer, the aromatic vinyl unit contains a styrene unit.

<9> The composition according to any one of <1> to <8>, wherein in the copolymer, the conjugated diene unit contains at least one selected from the group consisting of a 1,3-butadiene unit and an isoprene unit.

<10> A polymer molded article using the composition of any one of <1> to <9>.

Advantageous Effects of Invention

According to the present invention, there can be provided a polymer molded article excellent in rupture strength, and a composition capable of preventing gelation of the copolymer therein during kneading and capable of providing a polymer molded article excellent in rupture strength.

Description of Embodiments

<Composition>

The composition of the present invention contains a polymer component that contains a copolymer containing a conjugated diene unit and a non-conjugated olefin unit, and a compound (A) having a 1% mass loss temperature of 200°C or higher when heated at 20°C/min in a nitrogen atmosphere. The non-conjugated olefin unit is an acyclic non-conjugated olefin unit and the compound (A) is a compound having a structure represented by the formula (5),

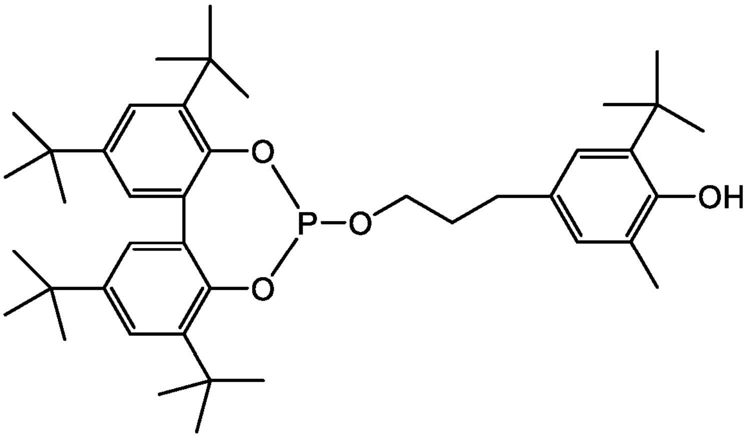

(5)

.

Hereinunder the copolymer containing a conjugated diene unit and a non-conjugated olefin unit is referred to as "the copolymer in the invention".

The 1% mass loss temperature means a temperature at which the mass of a compound loses by 1% by mass when the compound is heated at 20°C/min in a nitrogen atmosphere, and a compound having a higher 1% mass loss temperature is more excellent in heat resistance. The 5% mass loss temperature means a temperature at which the mass of a compound loses by 5% by mass when the compound is heated at 20°C/min in a nitrogen atmosphere.

In other words, the compound (A) has a 1% mass loss temperature of 200°C or higher when heated at 20°C/min in a nitrogen atmosphere, which means that even when the composition of the present invention is melt-kneaded at a high temperature (for example, at 140°C), the compound (A) hardly decomposes, that is, the composition of the present invention is excellent in heat resistance.

Preferably, the compound (A) is a compound that can function as an antiaging agent.

When a copolymer is melt-kneaded, the copolymer may gel. In particular, in the case where the temperature in kneading is a high temperature that is on the same level as that of the vulcanizing temperature of a rubber component (e.g., 140°C), a copolymer may often gel during kneading. In general, when a polymer gels by kneading, that is, when the gel amount increases, the rupture strength of a molded article tends to lower.

However, it has been found that the composition of the present invention contains the compound (A) along with the copolymer in the invention and therefore the copolymer therein is prevented from gelling and the rupture strength of the polymer molded article is thereby improved. Though not clear, the reason is considered to be because, even when the composition is kneaded at a high temperature on the same level as that of the vulcanizing temperature (for example, at 140°C), the compound (A) hardly decomposes as excellent in heat resistance, and therefore can readily keep the function as an antiaging agent to prevent gelation.

As a result, it is considered that, even when the composition containing the copolymer in the invention and the compound (A) is kneaded at a high temperature, the copolymer therein hardly gels, and the polymer molded article obtained from the composition of the present invention can be excellent in rupture strength.

Hereinunder, details of the composition of the present invention are described.

[Compound (A)]

The compound (A) has a 1% mass loss temperature of 200°C or higher when heated at 20°C/min in a nitrogen atmosphere.

Containing the compound (A), the composition of the present invention can prevent gelation of the copolymer therein when melt-kneaded and the rupture strength of the polymer molded article can be thereby improved.

The compound (A) has a structure represented by the following formula (5),

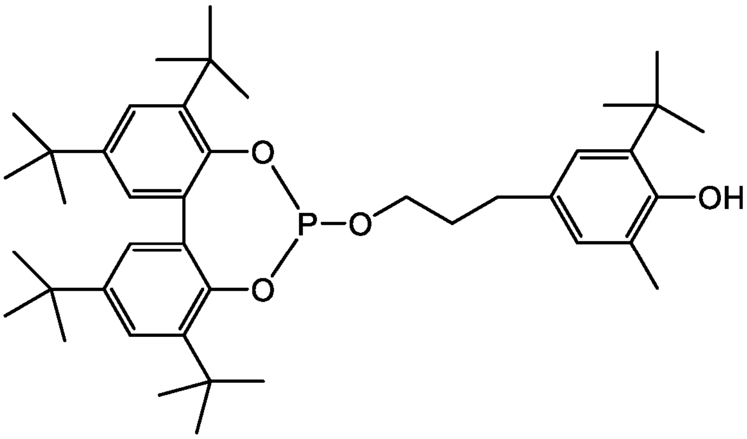 (5)

.

The content of the compound (A) in the composition of the present invention is preferably 0.1 to 30 parts by mass relative to 100 parts by mass of the polymer component.
When the content of the compound (A) is 0.1 parts by mass or more relative to 100 parts by mass of the polymer component, the copolymer can be prevented more from gelling during kneading the composition of the present invention and the rupture strength of the polymer molded article can be improved more.
The content of the compound (A) in the composition of the present invention is, from the viewpoint of preventing the compound (A) from bleeding out from the polymer molded article, preferably 30 parts by mass or less relative to 100 parts by mass of the polymer component.
The content of the compound (A) in the composition of the present invention is preferably 0.5 to 20 parts by mass relative to 100 parts by mass of the polymer component, more preferably 1.0 to 10 parts by mass, even more preferably 1.5 to 7 parts by mass.

[Polymer Component]

The polymer component contains a copolymer containing a conjugated diene unit and a non-conjugated olefin unit (the copolymer in the invention). When the composition of the present invention does not contain the copolymer in the invention, a polymer molded article excellent in rupture strength cannot be obtained.
The polymer component may further contain a resin component, a rubber component, and the like.

[Copolymer in the Invention]

The copolymer in the invention contains a conjugated diene unit and a non-conjugated olefin unit.
The copolymer in the invention may be a binary copolymer composed of two units of a conjugated diene unit and a non-conjugated olefin unit, or may be a ternary copolymer composed of three units further containing an aromatic vinyl unit, or may also be a multicomponent copolymer further containing any other monomer unit.
However, preferably, the copolymer in the invention has a butylene unit content of 0 mol%. For example, the hydrogenated styrene-butadiene-styrene copolymer elastomer used in JP 2012-246366A includes a hydrogenated styrene-ethylene/butylene-styrene copolymer (SEBS) containing a butylene unit. In the copolymer in the invention, preferably, the butylene unit content is 0 mol%, and preferably, the copolymer in the invention does not contain SEBS.

(Conjugated Diene Unit)

The conjugated diene unit is a structural unit derived from a conjugated diene compound serving as a monomer.
The conjugated diene compound as referred to herein means a diene compound of a conjugated system. The conjugated diene compound preferably has 4 to 8 carbon atoms. Specifically, examples of such a conjugated diene compound include 1,3-butadiene, isoprene, 1,3-pentadiene, and 2,3-dimethyl-1,3-butadiene. One alone or two or more kinds of conjugated diene compounds may be used either singly or as combined.
The conjugated diene compound as a monomer for the copolymer in the invention preferably contains at least one selected from the group consisting of 1,3-butadiene and isoprene from the viewpoint of improving the rupture strength of the polymer molded article, and is more preferably composed of at least one selected from the group consisting of 1,3-butadiene and isoprene, even more preferably 1,3-butadiene alone.
In other words, the conjugated diene unit in the copolymer in the invention preferably contains at least one selected from the group consisting of a 1,3-butadiene unit and an isoprene unit, and is more preferably composed of at

least one only selected from the group consisting of a 1-3-butadiene unit and an isoprene unit, and is even more preferably a 1,3-butadiene unit alone.

In the case where the copolymer in the invention is a binary copolymer, the content of the conjugated diene unit is preferably more than 0 mol% and 50 mol% or less. In this case, a copolymer excellent in elongation and weather resistance can be obtained. From the same viewpoint, the proportion of the conjugated diene unit in the binary copolymer is more preferably 40 mol% or less.

In the binary copolymer, the proportion of a 1,2-adduct (including 3,4-adduct) of the conjugated diene unit is preferably 5% or less. When the proportion is 5% or less, the heat resistance and resistance to flexural fatigue of the copolymer in the invention can be improved more. From the same viewpoint, the proportion of a 1,2-adduct (including 3,4-adduct) of the conjugated diene unit in the binary copolymer is more preferably 2.5% or less, even more preferably 1.0% or less. The proportion of a 1,2-adduct (including 3,4-adduct) of the conjugated diene unit is a proportion to all the conjugated diene units and is not a proportion to the entire copolymer in the invention. In the case where the conjugated diene unit is a butadiene unit, the proportion has the same meaning as the 1,2-vinyl bond amount.

In the case where the copolymer in the invention is a ternary copolymer or a multicomponent copolymer, the content of the conjugated diene unit is preferably 1 mol% or more, more preferably 5 mol% or more, even more preferably 10 mol% or more, and is preferably 50 mol% or less, more preferably 40 mol% or less, even more preferably 30 mol% or less.

When the content of the conjugated diene unit is 1 to 50 mol% of the entire copolymer in the invention, the rupture strength of the polymer molded article can be improved.

From the viewpoint of improving more the rupture strength of the polymer molded article, the content of the conjugated diene unit is preferably within a range of 1 to 50 mol% of the entire copolymer in the invention, more preferably within a range of 5 to 40 mol%, even more preferably within a range of 10 to 30 mol%.

(Non-conjugated Olefin Unit)

The non-conjugated olefin unit is a structural unit derived from a non-conjugated olefin compound serving as a monomer.

Here, the non-conjugated olefin compound means an aliphatic unsaturated hydrocarbon which is a compound having at least one carbon-carbon double bond. The non-conjugated olefin compound preferably has 2 to 10 carbon atoms. Specifically, examples of the non-conjugated olefin compound include $\alpha$-olefins, such as ethylene, propylene, 1-butene, 1-pentene, 1-hexene, 1-heptene, and 1-octene; and hetero atom-substituted alkene compounds, such as vinyl pivalate, 1-phenylthioethene, and N-vinylpyrrolidone. The non-conjugated olefin compound may be used either alone or in combination of two or more thereof.

The non-conjugated olefin compound serving as a monomer of the copolymer in the invention is, from the viewpoint of improving the rupture strength of the polymer molded article, an acyclic non-conjugated olefin compound, and the acyclic non-conjugated olefin compound is preferably an $\alpha$-olefin, more preferably an $\alpha$-olefin containing ethylene, and it is especially preferably ethylene alone.

In other words, the non-conjugated olefin unit in the copolymer in the invention is an acyclic non-conjugated olefin unit, and the acyclic non-conjugated olefin unit is preferably an $\alpha$-olefin unit, more preferably an $\alpha$-olefin unit containing an ethylene unit, and it is especially preferably composed only of an ethylene unit.

In the case where the copolymer in the invention is a binary copolymer, the content of the non-conjugated olefin unit is preferably 50 mol% or more and less than 100 mol%. In this case, the rupture strength at a high temperature of the polymer molded article can be effectively improved. From the same viewpoint, the proportion of the non-conjugated olefin unit in the binary copolymer is preferably 60 mol% or more.

In the case where the copolymer in the invention is a ternary copolymer or a multicomponent copolymer, the content of the non-conjugated olefin unit is preferably 40 mol% or more, more preferably 45 mol% or more, even more preferably 55 mol% or more, further more preferably 60 mol% or more, and is preferably 97 mol% or less, more preferably 95 mol% or less, even more preferably 90 mol% or less. When the content of the non-conjugated olefin unit is 40 to 97 mol% of the entire copolymer in the invention, the rupture strength of the polymer molded article can be improved.

From the viewpoint of improving more the rupture strength of the polymer molded article, the content of the non-conjugated olefin unit is preferably within a range of 40 to 97 mol%, more preferably within a range of 45 to 95 mol%, even more preferably within a range of 55 to 90 mol%, further more preferably within a range of 60 to 90 mol%.

(Aromatic Vinyl Unit)

Preferably, the copolymer in the invention further contains an aromatic vinyl unit.

The aromatic vinyl unit is a structural unit derived from an aromatic vinyl compound serving as a monomer.

Containing such an aromatic vinyl unit, the copolymer in the invention can get away from too much crystallization

derived from the non-conjugated olefin unit therein, and therefore can achieve high scratch resistance while improving the rigidity thereof with detracting from elasticity.

Here, the aromatic vinyl compound is an aromatic compound at least substituted with a vinyl group, and is not included in a conjugated diene compound. The aromatic vinyl compound preferably has 8 to 10 carbon atoms. Examples of such an aromatic vinyl compound include styrene, o-methylstyrene, m-methylstyrene, p-methylstyrene, o,p-dimethylstyrene, o-ethylstyrene, methylstyrene, and p-ethylstyrene. The aromatic vinyl compound may be used either alone or in combination of two or more thereof.

The aromatic vinyl compound as a monomer for the copolymer in the invention preferably contains styrene from the viewpoint of improving the rupture strength of the polymer molded article, and is more preferably composed of styrene alone. In other words, the aromatic vinyl unit in the copolymer in the invention preferably contains a styrene unit, and is more preferably composed of a styrene unit alone.

The aromatic ring in the aromatic vinyl unit is not contained in the main chain of the copolymer in the invention so long as it does not bond to an adjacent unit.

In the case where the copolymer in the invention is a ternary copolymer or a multicomponent copolymer, the content of the aromatic vinyl unit is preferably 2 mol% or more, more preferably 3 mol% or more, and is preferably 35 mol% or less, more preferably 30 mol% or less, even more preferably 25 mol% or less. When the content of the aromatic vinyl unit is 2 to 35 mol% of the entire copolymer in the invention, the rupture strength of the polymer molded article can be improved.

From the viewpoint of improving more the rupture strength of the polymer molded article, the content of the aromatic vinyl unit is preferably within a range of 2 to 35 mol% of the entire copolymer in the invention, more preferably within a range of 3 to 30 mol%, even more preferably within a range of 3 to 25 mol%.

The content of the other structural unit than the conjugated diene unit, the non-conjugated olefin unit and the aromatic vinyl unit is, from the viewpoint of attaining the desired effect of the present invention, preferably 30 mol% or less of the entire copolymer in the invention, more preferably 20 mol% or less, even more preferably 10 mol% or less, but further more preferably the copolymer does not contain the other structural unit, that is, the content is 0 mol%. Namely, the copolymer in the invention is preferably a binary copolymer composed of two units of a conjugated diene unit and a non-conjugated olefin unit, or a ternary copolymer composed of three units of a conjugated diene unit, a non-conjugated olefin unit and an aromatic vinyl unit.

From the viewpoint of improving the rupture strength of the polymer molded article, the copolymer in the invention is preferably a polymer produced by polymerizing, as monomers, at least one kind alone of a conjugated diene compound, one kind alone of a non-conjugated olefin compound and one kind of an aromatic vinyl compound.

In other words, the copolymer in the invention is preferably a copolymer containing one kind alone of a conjugated diene unit, one kind alone of a non-conjugated olefin unit and one kind of an aromatic vinyl unit, more preferably a ternary copolymer composed of only one kind alone of a conjugated diene unit, one kind alone of a non-conjugated olefin unit and one kind alone of an aromatic vinyl unit, even more preferably a ternary copolymer compose of a 1,3-butadiene unit, an ethylene unit and a styrene unit alone. Here, "one kind alone of a conjugated diene unit" includes conjugated diene units of different bonding modes.

In the case where the copolymer in the invention is a binary copolymer, preferably, the content of the conjugated diene unit is more than 0 mol% and 50 mol% or less and the content of the non-conjugated olefin unit is 50 mol% or more and less than 100 mol%.

In the case where the copolymer in the invention is a ternary copolymer, preferably, the content of the conjugated diene unit is 1 to 50 mol%, the content of the non-conjugated olefin unit is 40 to 97 mol%, and the content of the aromatic vinyl unit is 2 to 35 mol%.

The copolymer in the invention preferably has a polystyrene-equivalent weight-average molecular weight (Mw) of 100,000 to 9,000,000, more preferably 150,000 to 8,000,000. When Mw of the copolymer in the invention is 100,000 or more, the rupture strength of the polymer molded article can be sufficiently secured. Also when Mw is 9,000,000 or less, the processability of the composition is hardly worsened.

The copolymer in the invention preferably has a polystyrene-equivalent number-average molecular weight (Mn) of 10,000 to 10,000,000, more preferably 50,000 to 9,000,000, even more preferably 100,000 to 8,000,000. When Mn of the copolymer in the invention is 10,000 or more, the rupture strength of the polymer molded article can be sufficiently secured, and when Mn is 10,000,000 or less, the processability of the composition is hardly worsened.

The molecular weight distribution [Mw/Mn (weight-average molecular weight/number-average molecular weight)] of the copolymer in the invention is preferably 1.00 to 4.00, more preferably 1.00 to 3.50, even more preferably 1.80 to 3.00. When the molecular weight distribution of the copolymer in the invention is 4.00 or less, the copolymer in the invention can secure sufficiently homogeneous physical properties.

The weight-average molecular weight (Mw), the number-average molecular weight (Mn) and the molecular weight distribution (Mw/Mn) of the copolymer in the invention can be determined in gel permeation chromatography (GPC) using polystyrene as a standard substance.

The endothermic peak energy at 0 to 120°C of the copolymer in the invention, as measured with a differential

scanning calorimeter (DSC), is preferably 10 to 150 J/g, more preferably 30 to 120 J/g. When the endothermic peak energy of the copolymer in the invention is 10 J/g or more, the crystallinity of the copolymer in the invention is high to further improve crack resistance of the polymer molded article. When the endothermic peak energy of the copolymer in the invention is 150 J/g or less, the processability of the composition improves.

The endothermic peak energy of the copolymer in the invention can be measured using a differential scanning calorimeter according to JIS K7121-1987, for example, by heating the copolymer from -150°C to 150°C at a heating rate of 10°C/min.

The melting point of the copolymer in the invention, as measured with a differential scanning calorimeter (DSC), is preferably 30 to 130°C, more preferably 30 to 110°C. When the melting point of the copolymer in the invention is 30°C or higher, the crystallinity of the copolymer in the invention is high to further improve the crack resistance of the polymer molded article. When the melting point of the copolymer in the invention is 130°C or lower, the processability of the composition improves.

The melting point of the copolymer in the invention can be measured with a differential scanning calorimeter according to JIS K7121-1987.

The glass transition temperature (Tg) of the copolymer in the invention, as measured with a differential scanning calorimeter (DSC), is preferably 0°C or lower, more preferably -100 to -10°C. When the glass transition temperature of the copolymer in the invention is 0°C or lower, the rupture strength of the polymer molded article can be further more improved.

The glass transition temperature of the copolymer in the invention can be measured using a differential scanning calorimeter according to JIS K7121-1987.

The degree of crystallinity of the copolymer in the invention is preferably 0.5 to 50%, more preferably 3 to 45%, even more preferably 5 to 45%. When the degree of crystallinity of the copolymer in the invention is 0.5% or more, the crystallinity of the copolymer attributed to the non-conjugated olefin unit can be sufficiently secured, and the rupture strength of the polymer molded article can be improved further more. When the degree of crystallinity of the copolymer in the invention is 50% or less, the processability on the occasion of kneading the composition is improved, and the extrusion workability thereof is also improved.

Regarding the degree of crystallinity of the copolymer in the invention, a crystal melting energy of polyethylene of a 100% crystal component and a melting peak energy of the copolymer in the invention are measured, and from the energy ratio of polyethylene to the copolymer in the invention, the degree of crystallinity of the copolymer can be calculated. The melting peak energy can be measured with a differential scanning calorimeter.

As for the copolymer in the invention, it is preferred that the main chain thereof is composed only of an acyclic structure. According to this, the rupture strength of the polymer molded article can be further improved.

For confirming whether or not the main chain of the copolymer in the invention has a cyclic structure, NMR is adopted as a main measuring means. Specifically, in the case where peaks derived from the cyclic structure existing in the main chain (for example, peaks appearing at 10 to 24 ppm for three-membered to five-membered rings) are not observed, it indicates that the main chain of the copolymer is composed only of an acyclic structure.

In the present invention, a main chain of a polymer means a linear molecular chain formed of all other molecular chains (long-molecular chain or short-molecular chain, or both the two) pendant-like bonding thereto [see Section 1.34 of "Glossary of Basic Terms in Polymer Science IUPAC Recommendations 1996", Pure Appl. Chem., 68, 2287-2311 (1996)].

An acyclic structure means a linear structure or a branched structure.

In the case where a binary copolymer composed of two units of a conjugated diene unit and a non-conjugated olefin unit is produced as the copolymer in the invention, the copolymer in the invention can be produced via a polymerization step using a conjugated diene compound and a non-conjugated olefin compound as monomers.

In the case where a ternary copolymer formed of three units of a conjugated diene unit, a non-conjugated olefin unit and an aromatic vinyl unit is produced as the copolymer in the invention, the copolymer in the invention can be produced via a polymerization step using a conjugated diene compound, a non-conjugated olefin compound and an aromatic vinyl compound as monomers.

The production method for the copolymer in the invention may further include, as needed, a coupling step, a washing step and any other step.

Hereinunder the production method for the copolymer in the invention is described with reference to a case of producing a ternary copolymer as a representative thereof.

In production of a polymer, preferably a non-conjugated olefin compound and an aromatic vinyl compound alone are first added to a reactor and polymerized in the presence of a polymerization catalyst, without adding a conjugated diene compound thereto. In particular, in the case of using a catalyst composition to be mentioned below, a conjugated diene compound has a higher reactivity than a non-conjugated olefin compound and an aromatic vinyl compound, and therefore it would be difficult to polymerize one or both of a non-conjugated olefin compound and an aromatic vinyl compound in the presence of a conjugated diene compound. In addition, it would also be difficult to previously polymerize a conjugated diene compound and thereafter polymerize a non-conjugated olefin compound and an aromatic vinyl compound in a mode of additive polymerization, in view of the property of catalyst.

As the polymerization method, any arbitrary method is employable, such as a solution polymerization method, a suspension polymerization method, a liquid-phase bulk polymerization method, an emulsion polymerization method, a vapor-phase polymerization method or a solid-phase polymerization method. In the case where a solvent is used for polymerization, the solvent may be any one that is inert in polymerization. Examples of the solvent include toluene, cyclohexane, and normal hexane.

The polymerization step may be a one-stage reaction or a two-stage or more multistage reaction.

One-stage polymerization step is a step of polymerizing all the monomers to be polymerized at a time, that is, all a conjugated diene compound, a non-conjugated olefin compound, an aromatic vinyl compound and any other monomer, preferably all a conjugated diene compound, a non-conjugated olefin compound and an aromatic vinyl compound at a time.

The multistage polymerization step is a step of first reacting a part or all of one or two kinds of monomers to form a polymer (first polymerization stage), and then adding thereto remaining kinds of monomers not added in the first polymerization stage and a remaining part of the monomers added in the first polymerization stage and polymerizing them in one or more stages (second polymerization stage to final polymerization stage). In particular, in production of the copolymer in the invention, the polymerization step is preferably carried out in a mode of multistage polymerization.

In the polymerization step, preferably, the polymerization reaction is carried out in an atmosphere of an inert gas, preferably a nitrogen gas or an argon gas. The polymerization temperature for the polymerization reaction is not specifically limited, but is, for example, preferably within a range of -100°C to 200°C, and may be room temperature or so. The polymerization reaction pressure is preferably within a range of 0.1 to 10.0 MPa for the purpose of sufficiently taking a conjugated diene compound into the polymerization reaction system.

The polymerization reaction time is not also specifically limited, and is, for example, preferably within a range of 1 second to 10 days. The time may be appropriately selected depending on the kind of the polymerization catalyst and the condition of the polymerization temperature, etc.

In the step of polymerization of a conjugated diene compound, a polymerization terminator such as methanol, ethanol or isopropanol may be used to terminate the polymerization.

The polymerization step is preferably carried out in a mode of multistage polymerization. More preferably, the polymerization step includes a first step of mixing a first monomer material containing at least an aromatic vinyl compound and a polymerization catalyst to prepare a polymerization mixture, and a second step of adding a second monomer material containing at least one selected from the group consisting of a conjugated diene compound, a non-conjugated olefin compound and an aromatic vinyl compound, to the polymerization mixture, in which, more preferably, the first monomer material does not contain a conjugated diene compound and the second monomer material contains a conjugated diene compound.

The first monomer material to be used in the first step may contain a non-conjugated olefin compound along with an aromatic vinyl compound. The first monomer material may contain all the aromatic vinyl compound to be used, or may contain a part thereof. The non-conjugated olefin compound is contained in at least any of the first monomer material and the second monomer material.

Preferably, the first step is carried out inside a reactor in an atmosphere of an inert gas, preferably a nitrogen gas or an argon gas. The temperature (reaction temperature) in the first step is not specifically limited, and is, for example, preferably within a range of -100 to 200°C, or may also be room temperature or so. The pressure in the first step is not also specifically limited, but is preferably within a range of 0.1 to 10.0 MPa for the purpose of sufficiently taking an aromatic vinyl compound into the polymerization reaction system. The time to be spent for the first step (reaction time) may be appropriately selected depending on the type of the polymerization catalyst and the condition of the reaction temperature, etc. In the case where the reaction temperature is 25 to 80°C, the reaction time is preferably within a range of 5 minutes to 500 minutes.

In the first step, as the polymerization method for obtaining the polymerization mixture, any arbitrary method, such as a solution polymerization method, a suspension polymerization method, a liquid-phase bulk polymerization method, an emulsion polymerization method, a vapor-phase polymerization method, and a solid-phase polymerization method, can be adopted. In the case of using a solvent for the polymerization reaction, the solvent may be any one that is inert in the polymerization reaction, and examples thereof include toluene, cyclohexane, and normal hexane.

The second monomer material which is used in the second step is preferably only a conjugated diene compound, or a conjugated diene compound and a non-conjugated olefin compound, or a conjugated diene compound and an aromatic vinyl compound, or a conjugated diene compound, a non-conjugated olefin compound, and an aromatic vinyl compound.

In the case where the second monomer material contains at least one selected from the group consisting of a non-conjugated olefin compound and an aromatic vinyl compound in addition to a conjugated diene compound, these monomer materials may be mixed in advance along with a solvent and then introduced into the polymerization mixture, or each monomer material may be introduced thereinto in the form of a single state. The monomer materials may be added at the same time, or may be added successively.

In the second step, though a method of introducing the second monomer material into the polymerization mixture is not particularly restricted, it is preferred to continuously add the monomer materials to the polymerization mixture while controlling the flow rate of each monomer material (in a so-called metering mode). Here, in the case of using a monomer material that is a gas under the condition of the polymerization reaction system (for example, ethylene or the like as the non-conjugated olefin compound under a condition at room temperature and an atmospheric pressure), it can be introduced into the polymerization reaction system under a predetermined pressure.

Preferably, the second step is carried out inside a reactor in an atmosphere of an inert gas, preferably a nitrogen gas or an argon gas. The temperature (reaction temperature) in the second step is not specifically limited, and is, for example, preferably within a range of -100 to 200°C, or may also be room temperature or so. When the reaction temperature is elevated, the cis-1,4-bond selectivity in the conjugated diene unit may lower. The pressure in the second step is not also specifically limited, but is preferably within a range of 0.1 to 10.0 MPa for the purpose of sufficiently taking the monomer such as a conjugated diene compound into the polymerization reaction system. The time to be spent for the second step (reaction time) may be appropriately selected depending on the type of the polymerization catalyst and the condition of the reaction temperature, etc. For example, the time is preferably within a range of 0.1 hours to 10 days.

In the second step, a polymerization terminator such as methanol, ethanol or isopropanol may be used for terminating the polymerization reaction.

Preferably, the aforementioned polymerization step of a conjugated diene compound, a non-conjugated olefin compound, and an aromatic vinyl compound includes a step of polymerizing the respective monomers in the presence of at least one catalyst component selected from the following components (a) to (f). In the polymerization step, it is preferred to use at least one of the following components (a) to (f), and it is more preferred to combine two or more of the following components (a) to (f) and use them as a catalyst composition.

Component (a): A rare earth element compound or a reaction product of the rare earth element compound and a Lewis base.

Component (b): An organic metal compound.

Component (d): An aluminoxane.

Component (d): An ionic compound.

Component (e): A halogen compound.

Component (f): A cyclopentadiene skeleton-containing compound selected from a substituted or unsubstituted cyclopentadiene (a compound having a cyclopentadienyl group), a substituted or unsubstituted indene (a compound having an indenyl group), and a substituted or unsubstituted fluorene (a compound having a fluorenyl group).

The above components (a) to (f) can be used in the polymerization step by, for example, making WO 2018/092733 A as a reference.

The coupling step is a step of performing a reaction for modifying (coupling) at least a part (for example, the terminal) of the polymer chain of the copolymer obtained in the polymerization step.

In the coupling step, the coupling reaction is preferably performed on the occasion when the polymerization reaction has reached 100%.

A coupling agent which is used for the coupling reaction is not particularly restricted and can be appropriately selected depending on the intended purpose. Examples thereof include a tin-containing compound, such as bis(maleic acid-1-octadecyl)dioctyltin(IV); an isocyanate compound, such as 4,4'-diphenylmethane diisocyanate; and an alkoxysilane compound, such as glycidylpropyltrimethoxysilane. These may be used either alone or in combination of two or more thereof.

Of these, bis(maleic acid-1-octadecyl)dioctyltin(IV) is preferred from the standpoint of reaction efficiency and low gel formation.

The coupling reaction is able to increase the number-average molecular weight (Mn) of the copolymer.

The washing step is a step of washing the copolymer obtained in the polymerization step.

A medium to be used for washing is not particularly restricted and can be appropriately selected depending on the intended purpose. Examples thereof include methanol, ethanol, and isopropanol. On the occasion of using a catalyst derived from a Lewis acid as the polymerization catalyst, in particular, an acid (for example, hydrochloric acid, sulfuric acid, and nitric acid) can be added to such a solvent and used. The amount of the acid to be added is preferably 15 mol% or less relative to the solvent. When the amount added is 15 mol% or less, the acid may hardly remain in the copolymer to have any negative influence on the reaction in kneading and vulcanization of the composition.

In the washing step, the residual amount of the catalyst in the copolymer can be suitably lowered.

The content of the copolymer in the invention in the polymer component is, from the viewpoint of the rupture strength of the polymer molded article, preferably 10 to 100% by mass, more preferably 30 to 100% by mass, even more preferably 51 to 100% by mass, further more preferably 70 to 100% by mass.

[Resin Component]

The polymer component may further contain a resin component.

The resin component includes a polyolefin such as polyethylene and polypropylene; a polyamide; a polyester-based thermoplastic elastomer; and a polyester such as polybutylene terephthalate and polybutylene naphthalate. One alone or two or more kinds of resin components may be used either singly or as combined.

[Rubber Component]

The polymer component may further contain a rubber component such as a dienic rubber.

The dienic rubber includes a natural rubber (NR) and a synthetic dienic rubber.

Specifically, the synthetic dienic rubber includes a polyisoprene rubber (IR), a polybutadiene rubber (BR), a styrene-butadiene copolymer rubber (SBR), a chloroprene rubber (CR), a halogenobutyl rubber, an acrylonitrile-butadiene rubber (NBR), and the like.

One alone or two or more kinds of dienic rubbers can be used either singly or as combined. The dienic rubber may be modified.

The rubber component may contain a non-dienic rubber.

[Various Components]

In addition to the copolymer in the invention and the compound (A), the composition of the present invention may contain compounding ingredients that are generally used in the resin industry and the rubber industry, for example, a fiber; a filler; an antiaging agent; a softener; stearic acid, zinc oxide, a crosslinking accelerator, a crosslinking agent-containing crosslinking package; a resin; and a UV absorbent, as appropriately selected within a range not detracting from the object of the present invention. As these various components, commercial products can be favorably used.

(Fibers)

Fibers are not specifically limited, and glass fibers, cellulose fibers, carbon fibers, metal fibers, aramid fibers and gypsum fibers can be selected depending on the intended purpose. Above all, glass fibers, carbon fibers, aramid fibers and cellulose fibers are more preferred.

(Filler)

The filler includes carbon black and an inorganic filler.

In the case where the composition contains a rubber component, and when it further contains a filler, the mechanical strength of the vulcanized rubber can be improved and the rupture strength of the polymer molded article can be thereby improved.

The kind of the carbon black is not specifically limited, and examples thereof include GPF, FEF, HAF, ISAF, and SAF. HAF, ISAF, and SAF are preferred.

The inorganic filler includes a metal oxide such as silica, alumina and titania. Above all, silica is preferred. The kind of silica is not specifically limited, and includes a wet-process silica (hydrous silicic acid), a dry-process silica (anhydrous silicic acid), a colloidal silica, and the like. In the case where the composition of the present invention contains silica as a filler, the composition may further contain a silane coupling agent for the purpose of improving the dispersibility of silica in the composition.

(Antiaging Agent)

Examples of the antiaging agent include amine-ketone compounds, imidazole compounds, amine compounds, phenolic compounds, sulfur compounds and phosphorus compounds.

(Softener)

The softener includes petroleum-based softeners such as process oil, lubricant oil, naphthene oil, paraffin, liquid paraffin, petroleum asphalt, and vaseline; fatty acid-based softeners such as castor oil, linseed oil, rape seed oil, and palm oil; waxes such as beeswax, carnauba wax, and lanolin, and the like. One alone or two or more kinds of these softeners can be used either singly or as combined.

(Crosslinking Agent)

Not specifically limited, in general, peroxides, sulfur, oximes, amines and UV curing agents, etc. can be used as the crosslinking agent.

The copolymer in the invention contains a conjugated diene unit, and therefore can be crosslinked (vulcanized) with sulfur. Examples of sulfur include powdery sulfur, precipitated sulfur, colloidal sulfur, surface-treated sulfur, and insoluble sulfur.

(Crosslinking Accelerator)

In the case where the composition of the present invention contains a rubber component, the composition may contain a crosslinking accelerator (vulcanization accelerator) for accelerating the vulcanization of the rubber component.

Examples of the vulcanization accelerator include guanidine-based, sulfenamide-based, thiuram-based, thiazole-based, aldehydeamine-based, and thiocarbamate-based vulcanization accelerators.

<Production Method for Composition>

The composition of the present invention can be produced by blending the copolymer in the invention and the compound (A) and, in addition thereto, other various ingredients such as an antiaging agent, and kneading them with a kneading machine such as a Banbury mixer, a roller, an internal mixer, a single-screw extrusion kneader, or a twin-screw extrusion kneader.

Preferably, in production of the composition of the present invention, preferably, the components to be in the composition are blended each in an amount shown as the content of each component in the composition.

Kneading the components can be carried out all in one stage, or can be carried out in two or more stages.

In the case where the composition of the present invention is extruded by melt-kneading using an extrusion kneader, the extruded composition may be directly pelletized into pellets, or may be first formed in strands, and the strands may be pelletized into pellets. The shape of the pellets may be any ordinary one, such as columns, pillars and spheres.

<Polymer Molded Article]

The polymer molded article of the present invention is formed using the composition of the present invention.

Even when the composition of the present invention is kneaded at a high temperature on the same level as that of the vulcanizing temperature (for example, at 140°C), the copolymer therein can be prevented from gelling and the polymer shaped article can be excellent in rupture strength.

In the case where the main ingredient in the polymer component is a resin component, the polymer molded article can be referred to as a resin molded article or a resin product; while in the case where the main ingredient in the polymer component is a rubber component, the polymer molded article can be referred to as a rubber molded article or a rubber product. Here, the main ingredient in the polymer component means an ingredient whose content is the largest in the polymer component, and in particular, the main ingredient indicates an ingredient whose content in the polymer component is more than 50% by mass.

The polymer molded article of the present invention is excellent in rupture strength and therefore can be applied to various products. For example, it is favorable for tires and automotive parts (e.g., automotive seats, automotive batteries (e.g., lithium ion batteries), weather strips, hose tubes, rubber vibration insulators, cables, sealants).

In addition, the polymer molded article of the present invention is favorable for conveyor belts, crawlers, rubber vibration insulators, hoses, resin piping, sound absorbers, bedclothes, precision parts for office machinery (OA rollers), bicycle frames, golf balls, tennis rackets, golf shafts, resin additives, filters, adhesives, pressure-sensitive adhesives, inks, medical machinery (medical-use tubes, bags, microneedles, rubber sleeves, artificial organs, caps, packings, syringe gaskets, medicine stoppers, artificial legs, artificial limbs), cosmetics (UV powders, puffs, containers, waxes, shampoos, conditioners), detergents, building materials (floor materials, vibration control rubbers, seismic isolation rubbers, architectural films, sound absorbers, water-proof sheets, heat insulators, joint materials, sealant materials), wrapping materials, liquid-crystal materials, organic EL materials, organic semiconductor materials, electronic materials, electronic devices, communication instruments, aircraft members, machine members, electronic members, agricultural materials, electric cords, cables, fibers (wearable bases), daily necessaries (tooth brushes, shoe soles, glasses, lures, binoculars, toys, dust masks, garden hoses), robot members, optical members, road materials (asphalts, guard rails, poles, signs), protectors (shoes, protective vests), exterior members for electronic appliances, OA exterior members, soles and sealants.

In the above, OA means office automation, UV means ultraviolet, and EL means electroluminescence.

The polymer molded article of the present invention can be produced by molding the pelletized composition of the

present invention by injection molding or extrusion molding.

The composition of the present invention may be crosslinked using the already-described crosslinking agent, or without using a crosslinking agent, the composition may be crosslinked by electron beam crosslinking or microwave irradiation to give a polymer molded article.

## Examples

The present invention is hereunder described in more detail by reference to Examples, but it should be construed that these Examples are for exemplification of the present invention and do not whatsoever restrict the present invention.

<Preparation of Composition>

According to the formulation shown in Table 2, components were put into a Laboplastomill (by Toyo Seiki Kogyo Co., Ltd.), and kneaded at 250°C for 5 minutes at 50 rpm to prepare a composition.

Details of the components in Table 2 are as follows.

Copolymer (P): Ternary copolymer produced according to the production method mentioned below.

Compound (As): Compound having a structure represented by the formula (4), trade name "Sumilizer GS" by Sumitomo Chemical Co., Ltd,

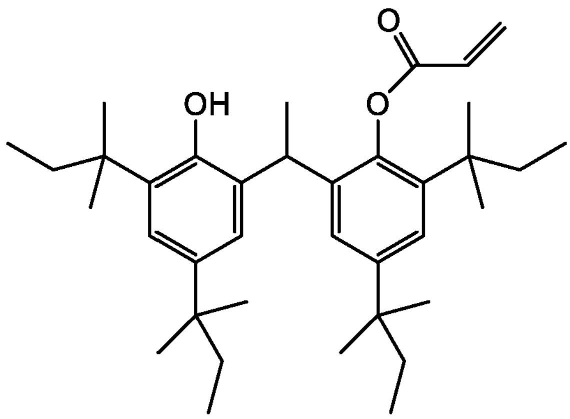

(4)

.

Compound (Ap): Compound having a structure represented by the formula (5), trade name "Sumilizer GP" by Sumitomo Chemical Co., Ltd.

Compound (Am): Compound having a structure represented by the formula (3), trade name "Sumilizer GM" by Sumitomo Chemical Co., Ltd,

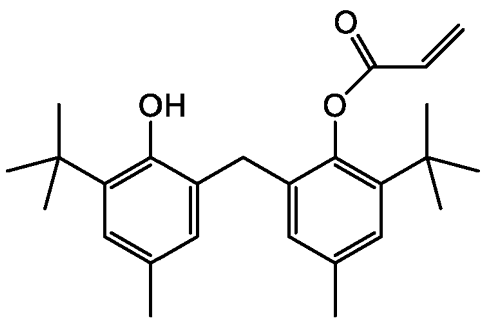

(3)

.

Antiaging Agent NS-6: 2,2-Methylenebis(4-methyl-6-tert-butylphenol), trade name "Nocrac NS-6" by Ouchi Shinko Chemical Industrial Co., Ltd.

Antiaging Agent 6C: N-phenyl-N'-(1,3-dimethylbutyl)-p-phenylenediamine, trade name "Nocrac 6C" by Ouchi Shinko Chemical Industrial Co., Ltd.

The 1% mass loss temperature and the 5% mass loss temperature shown in Table 2 are manufactures' catalogue values. In Table 2, "244/285" in Example 6 means that two types of compounds, a compound having a 1% mass loss

temperature of 244°C and a compound having a 1% mass loss temperature of 285°C were used; and "284/339" in Example 6 means that two types of compounds, a compound having a 5% mass loss temperature of 284°C and a compound having a 5% mass loss temperature of 339°C were used.

[Production of Copolymer (P)]

82 g of styrene and 680 g of toluene were put into a 2000-mL pressure-resistant stainless reactor that had been fully dried.

In a globe box in a nitrogen atmosphere, 0.037 mmol of mono(bis(1,3-tertbutyldimethylsilyl)indenyl)bis(bis(dimethylsilyl)amide)gadolnium complex 1,3-$[(t\text{-}Bu)Me_2Si]_2C_9H_5Gd[N(SiHMe_2)_2]$, and 0.037 mmol of dimethylanilinium tetrakis(pentafluorophenyl)borate $[Me_2NHPhB(C_6F_5)_4]$ were put into a glass container, and 25 g of toluene was added to give a catalyst solution. The catalyst solution was added to the pressure-resistant stainless reactor, and heated at 60°C.

Next, ethylene was put into the pressure-resistant stainless reactor under a pressure of 0.7 MPa, and the monomers therein were copolymerized at 75°C for a total of 2 hours. 240 g of a toluene solution containing 60 g of 1,3-butadiene was added continuously thereto at a speed of 2 g/mi.

Next, 1 mL of an isopropanol solution containing 5% by mass of 2,2'-methylene-bis(4-ethyl-6-t-butylphenol) (NS-5) was added to the pressure-resistant stainless reactor to stop the reaction.

Nest, using a large amount of methanol, the copolymer was separated and dried in vacuum at 50°C to give a copolymer (P).

The resultant copolymer (P) had the physical properties shown in Table 1.

Table 1

| | Copolymer (P) |
|---|---|
| Weight-Average Molecular Weight (Mw) ($\times 10^3$) | 453 |
| Number-Average Molecular Weight (Mn) ($\times 10^3$) | 201 |
| Peak Top Molecular Weight ($\times 10^3$) | 394 |
| Molecular Weight Distribution (Mw/Mn) | 2.3 |
| Butadiene Unit Content (mol%) | 23 |
| Ethylene Unit Content (mol%) | 71 |
| Styrene Unit Content (mol%) | 6 |
| Melting Point (°C) | 78 |
| Crystallinity Degree (%) | 12.1 |

The copolymer (P) did not have a peak at 10 to 24 ppm in the $^{13}C$-NMR spectral chart thereof, which confirms that the main chain of the copolymer was composed of an acyclic structure alone.

The physical properties of the copolymer (P) were measured according to the methods mentioned below.

[Measurement Methods for Physical Properties of Copolymer (P)]

(1) Number-average molecular weight (Mn), weight-average molecular weight (Mw), peak top molecular weight (Mp) and molecular weight distribution (Mw/Mn)

The number-average molecular weight (Mn), the weight-average molecular weight (Mw), and the molecular weight distribution (Mw/Mn) of the copolymer as expressed in terms of polystyrene were determined on the basis of monodispersed polystyrene through gel permeation chromatography [GPC: HLC-8121GPC/HT by Tosoh Corporation with two columns of $GMH_{HR}$-H(S)HT, by Tosoh Corporation and a detector of a differential refractometer (RI)]. The measurement temperature is 40°C.

(2) Content of butadiene unit, ethylene unit and styrene unit

The content (mol%) of the ethylene unit, the butadiene unit and the styrene unit in the copolymer was determined from integral ratios of the respective peaks in the $^1H$-NMR spectrum (100°C, d-tetrachloroethane standard: 6 ppm).

(3) Melting point

The melting point of the copolymer was measured with a differential scanning calorimeter (DSC, "DSC Q2000" by TA Instruments Japan Inc.) in conformity with JIS K7121-1987.

(4) Crystallinity degree

A copolymer sample was heated from -150°C to 150°C at 10°C/min to measure the exothermic peak energy (ΔH1) thereof. Also similarly, the crystal melting energy (ΔH0) of a 100% crystal component polyethylene was measured. From the ratio of the endothermic peak energy (ΔH1) of the copolymer to the crystal melting energy (ΔH0) of polyethylene (ΔH1/ΔH0), the crystallinity degree (%) derived from the ethylene unit (non-conjugated olefin unit) was calculated.
The endothermic peak energy of the copolymer sample and the crystal melting energy of polyethylene were measured with a differential scanning calorimeter (DSC, "DSC Q2000" by TA Instruments Japan Inc.).

(5) Confirmation of main chain structure]

The $^{13}$C-NMR spectrum of the synthesized copolymer was measured.

<Evaluation of composition>

The composition of Examples and Comparative Examples was weighed out in an amount of 3 mg, dissolved in 5 ml of trichlorobenzene at 140°C, and analyzed with a high-temperature GPC (by Toyo Seiki Seisaku-sho, Ltd.) at 140°C. From the area value of the resultant RI, the gel amount of the sample was calculated. The results are shown in Table 2.

<Production and evaluation of polymer molded article>

1. Rupture strength

Using a 40-t (ton) pressing machine, the composition of Examples and Comparative Examples was press-molded at 120°C into a 2-mm thick sheet to be a polymer molded article.
The rupture strength of the resultant polymer molded article was evaluated from the viewpoint of the tensile strength at break (Tb) and the elongation at break (Eb).
The tensile strength at break (Tb) was measured based on JIS K 6251 (2017), using a tensile tester (by Instron Japan Company Limited). The polymer molded article was elongated by 100% at 25°C, and the maximum tensile power needed for breaking the same was measured as Tb.
For the elongation at break (Eb), the polymer molded article was elongated at a speed of 100 mm/min at 25°C, and the length of the polymer molded article when it broke was measured. The elongated length relative to the length (100%) before elongation was calculated as Eb.
The results are shown in Table 2.

2. HF (toughness)

As a simplified evaluation method for toughness, the tensile strength at break (Tb) and the elongation at break (Eb) measured as the rupture strength were applied to the following formula, and HF [MPa ·%] was calculated

$$HF=(Tb\times Eb)/2$$

Based on the value of HF calculated in Comparative Example 2, the data were shown as indices. Samples of polymer molded article having a larger index are more excellent in heat resistance

Table 2

| | | Example 1* | Example 2 | Example 3* | Example 4* | Example 5 | Example 6 | Comparative Example 1 | Comparative Example 2 |
|---|---|---|---|---|---|---|---|---|---|
| Copolymer (P) | Part by mass | 100 | 100 | 100 | 100 | 100 | 100 | 100 | 100 |
| Compound (As) | Part by mass | 2 | - | - | 4 | - | 2 | - | - |
| Compound (Ap) | Part by mass | - | 2 | - | - | 4 | 2 | - | - |
| Compound (Am) | Part by mass | - | - | 4 | - | - | - | - | - |
| Antiaging Agent NS-6 | Part by mass | - | - | - | - | - | - | 2 | - |
| Antiaging Agent 6C | Part by mass | - | - | - | - | - | - | - | 2 |
| 1% Mass Loss Temperature | °C | 244 | 285 | 226 | 244 | 285 | 244/285 | 196 | 196 |
| 5% Mass Loss Temperature | °C | 284 | 339 | 266 | 284 | 339 | 284/339 | 239 | 239 |
| Kneading Temperature | °C | 250 | 250 | 250 | 250 | 250 | 250 | 250 | 250 |
| Gel Amount | % | 0 | 0 | 0 | 0 | 0 | 0 | 90 | 86 |
| Tensile Strength at break (Tb) | MPa | 15.6 | 22.3 | 21.1 | 12.9 | 22.3 | 19.3 | 7.3 | 4.3 |
| Elongation at break (Eb) | % | 821 | 869 | 871 | 818 | 882 | 850 | 459 | 133 |
| HF | MPa ·% | 6404 | 9689 | 9189 | 5276 | 9834 | 8203 | 1675 | 286 |
| HF Index | - | 2239 | 3388 | 3214 | 1845 | 3439 | 2869 | 586 | 100 |
| [* denotes Reference Example] | | | | | | | | | |

The compositions of Examples containing the copolymer (P) as a polymer component and further containing the compound (A) had a noticeably small gel amount, and in kneading at a high temperature, the copolymer (P) therein was prevented from gelling, as compared with the compositions of Comparative Examples 1 to 2 not containing the compound (A). Further, the rupture strength of the polymer molded articles of Examples 1 to 6 was more excellent than that of Comparative Examples 1 to 2.

As in the above, the composition containing the copolymer in the invention and the compound (A) can prevent gelation of the copolymer therein and can produce a polymer molded article having a high rupture strength.

## Claims

1. A composition comprising a polymer component that contains a copolymer containing a conjugated diene unit and a non-conjugated olefin unit, and a compound (A) having a 1% mass loss temperature of 200°C or higher when heated at 20°C/min in a nitrogen atmosphere, wherein the non-conjugated olefin unit is an acyclic non-conjugated olefin unit and the compound (A) is a compound having a structure represented by the formula (5),

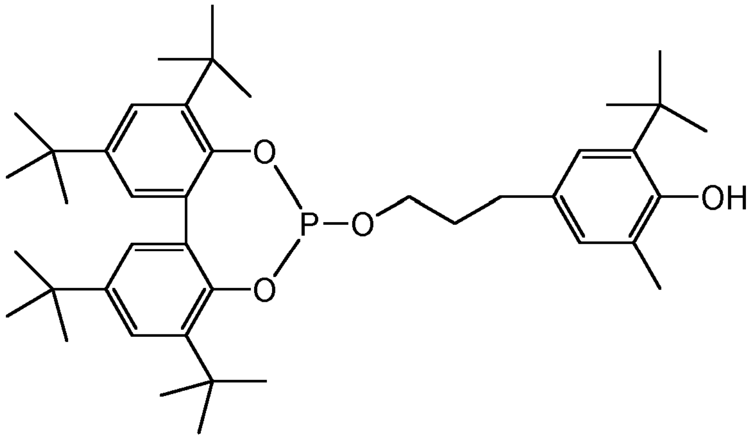
(5)

.

2. The composition according to claim 1, wherein the copolymer further contains an aromatic vinyl unit.

3. The composition according to claim 1 or claim 2, wherein the polymer component further contains one or more resin components selected from the group consisting of a polyolefin, a polyamide, a polyester-based thermoplastic elastomer, a polybutylene terephthalate, and a polybutylene naphthalate.

4. The composition according to any one of claims 1 to 3, wherein the content of the copolymer in the polymer component is 10 to 100% by mass.

5. The composition according to any one of claims 1 to 4, wherein in the copolymer, the content of the conjugated diene unit is more than 0 mol% and 50 mol% or less, and the content of the non-conjugated olefin unit is 50 mol% or more and less than 100 mol%.

6. The composition according to any one of claims 1 to 5, wherein the copolymer has a polystyrene-equivalent weight-average molecular weight of 100,000 to 9,000,000.

7. The composition according to any one of claims 1 to 6, wherein in the copolymer, the non-conjugated olefin unit is an acyclic non-conjugated olefin unit, and the acyclic non-conjugated olefin unit is an ethylene unit alone.

8. The composition according to any one of claims 2 to 7, wherein in the copolymer, the aromatic vinyl unit contains a styrene unit.

9. The composition according to any one of claims 1 to 8, wherein in the copolymer, the conjugated diene unit contains at least one selected from the group consisting of a 1,3-butadiene unit and an isoprene unit.

10. A polymer molded article using the composition of any one of claims 1 to 9.

**Patentansprüche**

1. Zusammensetzung, umfassend eine Polymerkomponente, die ein Copolymer enthält, das eine konjugierte Dieneinheit und eine nicht-konjugierte Olefineinheit enthält, und eine Verbindung (A), die eine 1% Massenverlusttemperatur von 200°C oder höher aufweist, wenn sie bei 20°C/min in einer Stickstoffatmosphäre erhitzt wird, wobei die nicht-konjugierte Olefineinheit eine acyclische nicht-konjugierte Olefineinheit ist und die Verbindung (A) eine Verbindung ist, die eine durch die Formel (5) dargestellte Struktur aufweist.

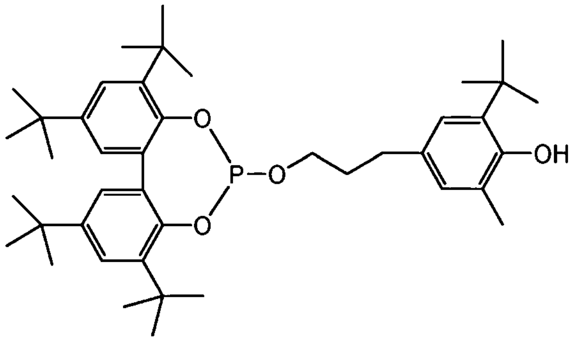 (5)

.

2. Zusammensetzung nach Anspruch 1, wobei das Copolymer weiter eine aromatische Vinyleinheit enthält.

3. Zusammensetzung nach Anspruch 1 oder Anspruch 2, wobei die Polymerkomponente weiter eine oder mehrere Harzkomponenten enthält, die aus der Gruppe bestehend aus einem Polyolefin, einem Polyamid, einem thermoplastischen Elastomer auf Polyesterbasis, einem Polybutylenterephthalat und einem Polybutylennaphthalat ausgewählt sind.

4. Zusammensetzung nach einem der Ansprüche 1 bis 3, wobei der Gehalt an Copolymer in der Polymerkomponente 10 bis 100 Ma.-% beträgt.

5. Zusammensetzung nach einem der Ansprüche 1 bis 4, wobei im Copolymer der Gehalt an konjugierter Dieneinheit mehr als 0 Mol-% und 50 Mol-% oder weniger beträgt und der Gehalt an nicht-konjugierter Olefineinheit 50 Mol-% oder mehr und weniger als 100 Mol-% beträgt.

6. Zusammensetzung nach einem der Ansprüche 1 bis 5, wobei das Copolymer ein Polystyrol-äquivalentes gewichtsdurchschnittliches Molekulargewicht von 100.000 bis 9.000.000 aufweist.

7. Zusammensetzung nach einem der Ansprüche 1 bis 6, wobei im Copolymer die nicht-konjugierte Olefineinheit eine acyclische nicht-konjugierte Olefineinheit ist und die acyclische nicht-konjugierte Olefineinheit eine Ethyleneinheit allein ist.

8. Zusammensetzung nach einem der Ansprüche 2 bis 7, wobei im Copolymer die aromatische Vinyleinheit eine Styroleinheit enthält.

9. Zusammensetzung nach einem der Ansprüche 1 bis 8, wobei im Copolymer die konjugierte Dieneinheit mindestens eines aus der Gruppe bestehend aus einer 1,3-Butadieneinheit und einer Isopreneinheit ausgewählt enthält.

10. Geformter Polymerartikel unter Verwendung der Zusammensetzung nach einem der Ansprüche 1 bis 9.

**Revendications**

1. Composition comprenant un composant polymère qui contient un copolymère contenant un motif diène conjugué et un motif oléfine non conjugué, et un composé (A) présentant un 1 % de perte de masse à une température supérieure ou égale à 200 °C lorsqu'il est soumis à un chauffage de 20 °C/min sous atmosphère d'azote, dans laquelle le motif oléfine non conjuguée est un motif oléfine non conjugué acyclique et le composé (A) est un composé présentant une structure représentée par la formule (5),

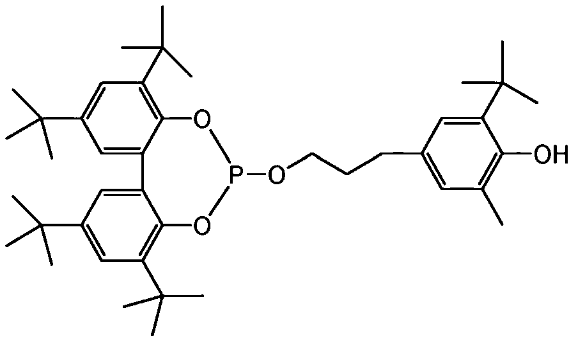

(5)

.

2. Composition selon la revendication 1, dans laquelle le copolymère contient en outre un motif vinyle aromatique.

3. Composition selon la revendication 1 ou la revendication 2, dans laquelle le composant polymère contient en outre un ou plusieurs composants de résine sélectionnés dans le groupe consistant en une polyoléfine, un polyamide, un élastomère thermoplastique à base de polyester, un téréphtalate de polybutylène et un naphtalate de polybutylène.

4. Composition selon l'une quelconque des revendications 1 à 3, dans laquelle la teneur en copolymère dans le composant polymère est de 10 à 100 % en masse.

5. Composition selon l'une quelconque des revendications 1 à 4, dans laquelle, dans le copolymère, la teneur en motifs diènes conjugués est supérieure à 0 % en moles et inférieure ou égale à 50 % en moles, et la teneur en motifs oléfines non conjugués est supérieure ou égale à 50 % en moles et inférieure à 100 % en moles.

6. Composition selon l'une quelconque des revendications 1 à 5, dans laquelle le copolymère présente une masse moléculaire moyenne en poids équivalente polystyrène de 100 000 à 9 000 000.

7. Composition selon l'une quelconque des revendications 1 à 6, dans laquelle, dans le copolymère, le motif oléfine non conjugué est un motif oléfine non conjugué acyclique, et le motif oléfine non conjugué acyclique est un motif éthylène seul.

8. Composition selon l'une quelconque des revendications 2 à 7, dans laquelle, dans le copolymère, le motif vinyle aromatique contient un motif styrène.

9. Composition selon l'une quelconque des revendications 1 à 8, dans laquelle, dans le copolymère, le motif diène conjugué contient au moins un élément sélectionné dans le groupe consistant en un motif 1,3-butadiène et un motif isoprène.

10. Article moulé en polymère utilisant la composition selon l'une quelconque des revendications 1 à 9.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2012246366 A
- WO 2017065300 A1
- EP 2679628 A1
- EP 2700671 A1
- US 6290613 B1
- DE 112012004088 T5
- US 2013085225 A1
- US 2012190771 A1
- EP 3192820 A1
- US 2009247692 A1
- JP 2010037402 A
- WO 2018194028 A1
- WO 2018092733 A


### Non-patent literature cited in the description


- Glossary of Basic Terms in Polymer Science IUPAC Recommendations 1996. *Pure Appl. Chem.*, 1996, vol. 68, 2287-2311